Europäisches Patentamt

European Patent Office

Office européen des brevets

(11) Publication number: **0 223 540 B1**

# EUROPEAN PATENT SPECIFICATION

(45) Date of publication of patent specification: **02.10.91**

(51) Int. Cl.⁵: **A23L 2/38**, A45F 5/00, A45F 3/16

(21) Application number: **86308777.1**

(22) Date of filing: **11.11.86**

(54) **High energy hypotonic sports drink.**

(30) Priority: **15.11.85 US 798417**

(43) Date of publication of application:
**27.05.87 Bulletin 87/22**

(45) Publication of the grant of the patent:
**02.10.91 Bulletin 91/40**

(84) Designated Contracting States:
**AT BE CH DE ES FR GB GR IT LI LU NL SE**

(56) References cited:
**FR-A- 2 310 708**    **US-A- 3 894 148**
**US-A- 3 928 135**    **US-A- 4 018 371**
**US-A- 4 042 684**    **US-A- 4 090 650**
**US-A- 4 312 856**    **US-A- 4 322 024**
**US-A- 4 322 407**

(73) Proprietor: **Sports Drink, Inc**
**191 Post Road West**
**Westport Connecticut 06880(US)**

(72) Inventor: **Tauder, Arthur R.**
**10 Garden Road Weston**
**Connecticut 06883(US)**
Inventor: **Costill, David L.**
**3907 West Ethel**
**Muncie Indiana 47304(US)**
Inventor: **Mink, Barry D.**
**100 E. Main Street**
**Aspen Colorado 81611(US)**
Inventor: **Albrecht, James L.**
**111 Hamlet Hills Road Apartment 1208**
**Baltimore Maryland 21210(US)**

(74) Representative: **Morton, Colin David et al**
**Keith W Nash & Co. Pearl Assurance House**
**90-92 Regent Street**
**Cambridge CB2 1DP(GB)**

## Description

TECHNICAL FIELD

This invention relates to compositions for a hypotonic, high energy fluid replacement beverage commonly referred to as a sports drink.

This invention relates to a beverage for providing rapid energy and fluid replacement to the muscle tissue of a human being comprising a combination of water, free glucose and/or fructose, glucose polymer, and acidulent and flavoring agents, wherein the glucose polymers preferably are in chains having a degree of polymerization of between 4 and 15, and which travels as a chain through the stomach before breaking down. Preferably for certain exercise conditions, the ratio of free glucose to glucose polymer is in the range of 2 to 5, with the overall adjustment in the concentration of free glucose and glucose polymer being within the preferred range of 2.5 to about 12.5 or over 1.5 to 14 percent.

This invention in a more specific aspect relates to a sports drink or beverage that affords the athlete the better, if not the best, of two options, by providing a hypotonic beverage say in high temperature/humidity conditions composed of fructose, glucose polymer, acidulent and flavoring agents to provide rapid rehydration and energy sources for muscle utilization while at another period in the exercise or athletic contest a hypotonic beverage may be provided to supply ready glucose from a drink composed of glucose, glucose polymer, acidulent and flavoring agent when the primary need is replacement of energy sources. These two options may at times hereinafter be referred to respectively as an aqueous fructose hypotonic beverage and an aqueous glucose hypotonic beverage.

Another aspect of this invention and one of its specific utilities is as a package, runner portable, individualized liquid energy replacement including a series of hollow food grade containers preferably of a suitable plastic and having a capacity of about 15 to 45 milliliters, said container having a breakaway or removable stopper to expose a mouth part, with each container being aseptically or sterilely filled with a liquid food concentrate preferably comprising at least a concentrate of glucose and/or fructose and glucose polymers in water together with an acidulent and sufficient flavoring to give a pleasant taste. In one preferred embodiment, the concentrated food in these containers is a liquid food concentrate containing from about 25 percent to about 65 percent of carbohydrates, preferably in a ratio of monosaccharides to polymers of 2 to 5 when packed in the exercise portable package. Further, the package may contain either all individualized containers of the aqueous hypotonic fructose drink, aqueous hypotonic glucose drink or any combination thereof.

This beverage brings together major developments in the field of sports medicine and nutritional science, by providing a drink which is hypotonic that will provide energy rapidly to the human body, and at the same time provide fluid replacement and provides for its transport by the athlete and consumption during the exercise.

BACKGROUND ART

Sports medicine as a field involves treatment of athletic injuries. It is rapidly evolving as well into a field for the enhancement of human vitality and performance. It is a study of maximums.

Prolonged strenuous activity under adverse environmental conditions poses the test of maximum energy and endurance. Competitive events such as marathons, long distance cycling races, and the like, result in a drainage of the body's reserves of immediate energy for muscular activity. Muscles store available energy in the form of glycogen, a biological form of glucose which is the simplest basic sugar molecule. Glucose is the basic fuel converted by the biological engine of the body into muscle energy. This form of fuel known as glucogen is depleted substantially during prolonged vigorous exertion. When this occurs, the body's engine has depleted its storehouse of immediately available energy. In simplistic terms, the body tells its owner to stop and rest, to get nutrition, and rebuild the store of glycogen. In a prolonged strenuous activity, the owner may push his or her body beyond this point and the body will provide the fuel, but only at the expense of the less efficient burning away of other material such as fat and protein.

The other loss that occurs to the body during prolonged strenuous activity is dehydration. The fluids of a healthy robust cell, the fluids around the cell, and the fluid content of the blood begins to dry up.

To maximize performance, muscle tissue needs replenishment of fluid and available glucose.

A number of sports drinks have been developed in the past and are indicated by a number of United States patents.

Powered and concentrate drink formulations and methods for preparing them have been developed as indicated by U.S. Patent No. 2,999,754. Energy enhancement drinks and processes have been developed such as in U.S. Patent No. 3,894,148 relating to nutritional and exercise therapy to maximize the storage of glygocen in the muscle tissue and to include sugars such as fructose. Salt additives have been defined such as in U.S. Patent No. 4,042,684. Stabilizing patents and clouding agents have been developed such as in U.S. Patent No. 4,093,750 and in U.S. Patent No. 4,187,326. Protein fortification drinks have been described such as U.S. Patent No. 4,309,417. Salts and sugar addition drinks, including the use of oligosaccharides and polysaccharides in monosaccharide-free drinks are described in U.S. Patent No. 4,312,856. Another electrolyte drink is described in U.S. Patent No. 4,322,407. And, a process for production of glucose polymers is described in U.S. Patent No. 3,928,135.

## GENERAL ASPECTS OF INVENTION

One of the aspects of this invention has been the concept of controlling so-called "tonicity" in a beverage to effect absorption rate.

It has been found that drinks of a lower tonicity so-called hypotonic beverages, that is drinks having a lower concentration of particle numbers transfer their fluid content and particle numbers most rapidly and effectively into isotonic blood serum which is so-called isotonic having concentrations equivalent to normal saline solution.

Accordingly, sports drinks have been developed that are hypotonic, meaning of a reduced concentration of dissolved particles. Water absorption and particle absorption are faster from more diluted solutions. The more concentrated electrolyte drinks are great for replacing mineral salts, but their provision of ability to replace fluids and to give immediate energy to a competitor as shown by the theory of tonicity is even less effective than the diluted versions.

Prior research in physiology and medicine have established that fluid intake and the replacement of an energy source are critical factors in athletic performances and well-being during intensive, extended athletic activity. An intensive exercise is defined as exercise requiring at least 70 to 80 percent of VO2 Max. Extended activity is defined as a workout lasting 45 minutes or more.

Of these two critical factors, fluid intake and maintenance of fluid balance is of primary importance, especially when the exercise occurs at ambient temperatures above 25° C. During intensive, extended exercise, the body loses fluids in the cooling processes and in the metabolic exchanges that take place. Dehydration can result in an inefficient circulatory supply as well as contributing to the serious consequences of hyperthermia.

The primary source of energy used during intensive, extending exercise is glucose, commonly called dextrose. Glucose is also referred to as "blood sugar," because it is the primary form of sugar carried in the blood and the sugar that is most easily utilized by the body. Glycogen is the body's stored form of glucose. Glycogen stores are limited in the human body, even after high carbohydrate diets have been undertaken.

An aerobic endurance athletic event requiring greater than 80 percent VO2 max effort and lasting 50-60 minutes will result in glycogen depletion to the extent that blood glucose declines if a carbohydrate replacement is not taken. If exercise continues, without replacement of an energy source, the subject will usually have the sensation of fatique, mental and muscular slowing and eventually collapse.

It has also been hypothesized that mineral salts and vitamin replacement is not essential during and immediately following extended aerobic exercise. Even though mineral salts are present in perspiration and lost through perspiration during exercise, the body does not deplete its supply to the point at which replacement is necessary during exercise. The salts lost during exercise can be easily replaced post exercise if a normal, nutritious diet is followed. In theory, with a balanced diet, in 24-48 hours, one could replace all the mineral salts that a well-trained athlete would deplete during a workout of up to six hours in duration.

In the formulation of a drink for consumption during the immediately following intensive, extended exercise, the osmolality of the beverege is critical. As fluid replacement is of primary concern, a hypotonic beverage is desired because the stomach most easily empties a hypotonic solution.

The generally accepted standard of measurement for osmolality is milliosmols/Liter, and a hypotonic solution should fall below 220 mosm/Liter, preferably below 200 mosm/Liter. The osmotic pressure or tonicity of a beverage is directly related to the concentration of particles in solution. All ingredients in the beverage is directly related to the concentration of particles in solution. All ingredients in the beverage formulation, except distilled water, add to the osmolality of the beverage; therefore, only essential ingredients should be included in the formulation. It is also theoretically possible that a beverage that is hypotonic prior to ingestion may, in fact, become hypertonic in the stomach or intestine, thereby negating the emptying advantages present in a truly hypotonic beverage. This can occur if some particles break up into even smaller particles in the earlier stages of digestion prior to leaving the stomach or in the intestinal track.

In addition to the need for fluid and replacement, during extended aerobic exercise, an athlete may have need for various items to provide comfort and protection from the elements, to promote safety and security and to generally enhance the enjoyment of the activity. However, the athlete needs to remain as unencumbered as possible in order to maintain freedom of movement. It is of particular importance that the athlete carry the least amount of added weight possible.

The athlete's needs for various items or accessories changes from day to day and even during the course of exercise. The athlete's needs depend upon the nature of the exercise, the length of the exercise, the environmental conditions and upon psychological and physiological factors. There are varying seasonal needs for accessories. When the athlete dresses for comfort at the beginning of a workout, he may be overdressed for the end of the workout. In addition, the weather often may change during the course of the athletic activity, requiring some kind of protective gear.

Security is also becoming a factor for aerobic athletes who do extended training and roadwork. The athlete may wish to carry sound devices, tear gas or other chemical repellants. If the athlete should wish to carry portable radios and tape recorders, it is important that the devices be carried on the waist for the optimum weight distribution, comfort and freedom of movement.

While belt packs have been designed and marketed for many purposes outlined above, no modular system exists that can accommodate the varying needs of the aerobic exercise.

Examples of presently existing individual belt packs are Patent No. 4,322,024 for carrying food in quantity and 1,606,667 for swimmers to carry valuables. This invention allows the athlete to carry supplies to meet a variety of needs. The lightweight nature of the materials used, the fasteners allow the athlete to wear the belt without emcumbering freedom of motion and performance or adding to his upper body weight or weight distribution.

This invention relates to a means of drink formulation that provides both high energy glucose replacement, together with fluid replacement at the maximum absorption rate. It relates also to a convenient means for carrying said drink formulation as well as other accessories which add to the comfort and safety of the athlete.

## BRIEF DESCRIPTION OF THE DRAWINGS

The present invention may be more readily appreciated and understood by reference to the drawings wherein:

Figs. 1 and 2 are diagrammatic showings of the body's assimilation of the respective fructose and glucose through the digestive system to the muscles;

Fig. 3 is a perspective view of a waist carrier with various plies peeled to expose underlying plies of materials;

Fig. 4 is a cross-sectional view of Fig. 3 along lines 4-4;

Fig. 5 is a cross-sectional view of Fig. 3 along lines 5-5;

Fig. 6 is a view of the belt showing one embodiment of a modular pack in the open position preparatory to being amounted on the bolt shown in Fig. 3;

Fig. 7 is a perspective view of one embodiment of a modular pack;

Fig. 8 is a top view of an embodiment of a modular pack for carrying multiple bottles or bottles and a flashlight or other accessories such as named herein; and

Fig. 9 is a frontal view of the modular pack of Fig. 8 showing various bottles having breakaway and removable stoppers.

## BEST MODE FOR CARRYING OUT THE INVENTION

The present invention relates to a beverage formulated in water or to be mixed with water that contains free glucose and/or fructose in the form of simple glucose or fructose molecules together with glucose polymers, acidulent and flavoring. The glucose polymers, in combination with the free glucose molecules, are the essence of the invention in one embodiment, when formulated to a design maximizing energy enhancement and fluid replacement in a good tasting beverage. An acidulent, such as citric acid or its anhydride, is used for the dual purpose of lowering pH to increase absorption rates and to give the beverage a clean, refreshing taste. Flavorings are added to improve taste as well. U.S. Patents 2,999,754 and 4,309,417 enumerate some of the many acidulents and flavoring agents that may be used in this invention.

An interesting effect of the polymers is that it acts as a unit or single particle for effects in the diffusion process, even though it may consist of a number of smaller sugar molecules linked together. In the polymer, the individual units link together and behave as a single, just like a number of people holding hands may rapidly escape a burning theatre, or a bus full of people moves through the congested traffic of rush hour as rapidly as a single vehicle with a single person. Glucose polymers thus can have the ability of carrying multiple glucose units through the diffusion processes of digestion and absorption and into the blood serum as individual glucose molecules for immediate energy consumption by muscle tissue. Fluid replacement is maximized by keeping the beverage hypotonic. A combination of free glucose molecules and/or free fructose molecules, together with glucose-based polysaccharides averaging from 7 to 11 units in a chain, together with an acidulent and flavorings, provide a hypotonic beverage maximizing fluid replacement and energy enhancement. Other well known acidulents are listed in U.S. Patent 2,999,754. Any of the well known flavoring agents either natural or synthetic may be used to develop the desired taste.

The product invention in one aspect is characterized as a hypotonic fluid replacement and energy drink to be consumed during and immediately following intensive, extended athletic activity. The energy source may be in two forms, a hypotonic glucose fluid and a hypotonic fructose fluid. The hypotonic glucose fluid is a glucose in monosaccharide form and glucose in polysaccharide form, commonly referred to as glucose polymers. The hypotonic fructose fluid is a fructose in an aqueous solution of a monosaccharide or a polysaccharide form. This beverage invention does not claim to replace mineral salts nor vitamins as they are considered non-essential ingredients during and immediately following exercise. The preferred formulations do not contain salts. The product invention does not quench thirst nor does it contain any ingredients to relieve the perceptions of thirst.

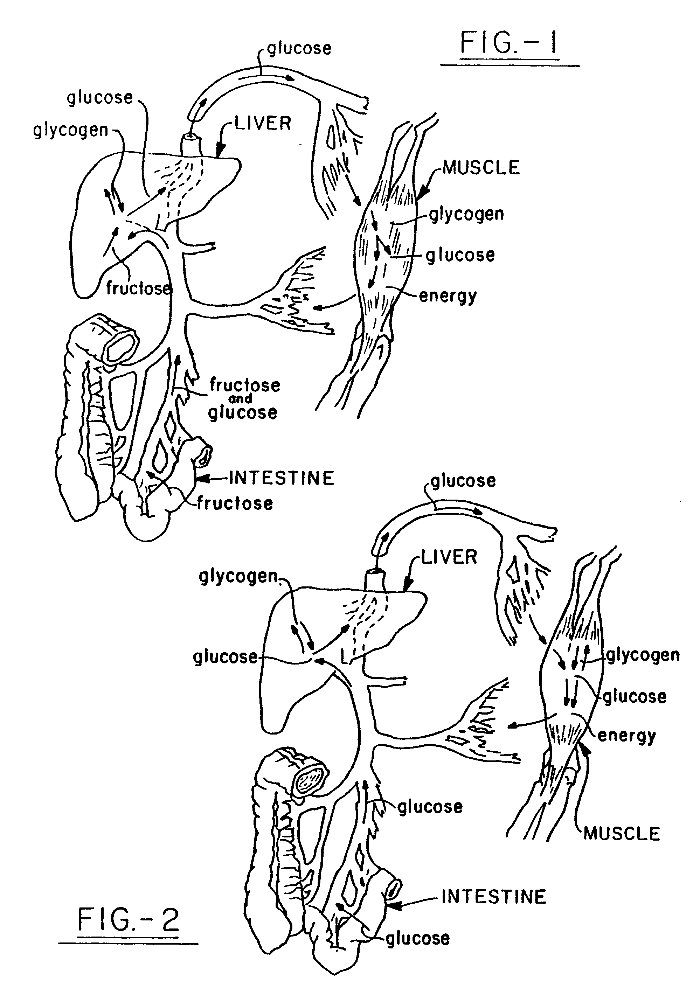

In one aspect, the primary energy source of this beverage is glucose because glucose is the form of sugar most easily digested and most easily utilized by the body during intense, extended exercise. The monosaccaride form of glucose is used both as a directly utilized energy source and as a sweetening agent. In a preferred aspect of this invention, unlike those of prior art, glucose is used and fructose is excluded because of the direct utilization of glucose by muscles and the brain without conversion by the liver. Fructose requires conversion to glucose by the liver, prior to utilization by the body or prior to storage as glycogen. See Figs. 1 and 2 which clearly show in diagram flow form, the much more time efficient delivery of glucose to the members with the system of the present invention compared to a fructose system, which requires active liver conversion. Especially when the body is operating above 75 percent VO2 Max, in theory, the preferred energy source is that which can be utilized most directly.

On the other hand during some condition of exercise, especially in heat over 25° C when there is danger of dehydration, it is desirable to use essentially an aqueous hypotonic beverage comprising a free fructose molecule, glucose polymer, acidulent and flavoring primarily to maximize fluid delivery and secondarily to replace energy stores.

Oligosaccharides can be substituted for monosaccharides to lower osmotic pressure, and the total amount of carbohydrates can range up to 20 percent. Oligosaccharides with low degrees of polymerization such as sucrose, maltose and maltotriose could conceiveably hydrolyze in the early stages of digestion and raise the osmotic pressure significantly, even to the point of hypertonicity, and become a rate limiting factor for rehydration and energy replacement. The use of the monosaccharides significantly decreases the possibility that the beverage may have a significantly high osmotic pressure in the digestive tract, and thereby lessens the chances to reduce absorption of critically needed fluids.

The salt-free formulation enables the invention to include monosaccharides and increased amounts of total carbohydrates that would not be possible if the non-essential mineral salts were included.

The polysaccharide chosen by the process of the invention is one special-tailored to meet specific needs. The carbohydrate energy content of the drink is greatly multiplied with little effect on osmolality or tonicity. It is designed to remain linked at least throughout its passage through the stomach, with breakdown not beginning to occur until passage through the intestines or further into the diffusive and transport systems of the body. It is designed to rapidly and easily disassociate or unlink into individual glucose molecules, with the least energy lost due to bodily conversion processes. It is a timed release mechanism specific to providing muscle tissue with glucose molecules. The monosaccharides provide a sweet taste and an immediate flow of the simplest energy substance available to the body for immediate energy. This flow diffuses throughout the body, meeting immediate fuel requirements of cells. Bundles of simple fuel substance in the form of the polymer chain of 7 to 11 glucose units in length, are available in amounts approximately equal to the unit numbers of the individual glucose molecules, providing substantially enhanced energy reserves also rapidly available to muscle tissue to complete new strenuous exertion required and to initiate the restorative process prior to depletion or destruction of the body proteins and structural body tissue. The invention contemplates that the ratio of monosaccharides to glucose polymers are in the range of 1:1 to 1:5.

The precise percentages of monosaccharides to glucose polymer, the chain length and chain configuration, the overall concentration and osmolality of tonicity characteristics and the precise pH can be carefully and specifically tailored to meet precise needs such as may occur in specific endurance events. It is becoming known that the effects on one's body of a marathon run in certain temperature and humidity, at certain altitudes, etc. and needs can be especially met by the energy and fluid enhancement formulations of this invention process.

The polysaccharide selected by the process for formulation of the following two more desirable embodiments of the invention is multodextrins, a commercially available polysaccharide of glucose with an average degree of polymerization ranging from 7 to 12, but which could cover a broader range of between 4 to 15. It should be understood, however, that under the process of this invention, the polymer structure may be any polysaccharide designed to meet the specific energy enhancement and time release goals of the process. For example, many glucose polymers with an average degree of polymerization ranging from 7.0-12.0 have a minimum composition of 16 percent of oligosaccharides that may be readily hydrolyzed into glucose. These polymers also contain over an 80 percent composition of pentasaccharides, and above that they may be hydrolyzed and broken into glucose for utilization further along in a diffusion process through the body to specific cells or cell areas for energy enhancement. It should be kept in mind that the glucose polymers envisioned can take any of a variety of chain structures and overall configurations and may consist of sub-units of mono-, oligo-, polysaccharides, that is, that each polysaccharide can break down to smaller multiple units for use in feeding and sustaining extreme body exertion during an endurance event, thus having a continuous timed release effect for maximizing performance through the provision of carbohydrate energy sources to the body under hypotonic and high fluid absorption characteristics. Certain of the polysaccharide drinks heretofore developed may have actually inhibited fluid replacement and energy absorption by providing readily disassociable oligosaccharide units that disassociate, creating hypertonic conditions in the intestinal tract, effectively blocking absorption of fluids and energy sources supplied to performing muscles.

In theory, this invention may provide a continuous timed-release of carbohydrates between ingestion of the beverage every 15-20 minutes during exercise. Thus, an athlete could start with the aqueous hypotonic fructose beverage during the warm-up and initial phase of the athletic event and change to the aqueous hyptonic glucose drink at a later stage to get not only timed release of carbohydrates but to alter the balance between fluid replacement and the replacement of glucose for energy.

One less preferred form of this invention includes less than one tenth of 1 percent of mineral salts in the form of sodium benzoate that serves as a preservative when the product is processed at ambient temperature. This invention does not contain sodium chloride, potassium chloride, sodium bicarbonate, or sodium citrate, often used as mineral salt replacement in sports drinks.

During exercise, it is recommended that four to eight ounces of this beverage in single strength form be consumed every 15 to 20 minutes. The beverage is recommended for consumption immediately following exercise during the cool-down period that generally occurs during the 30 minutes following intense, extended exercise. The beverage should be consumed cold at 40-50°F or 4-10°C, because gastric emptying will be more rapid with a cold solution. The pH level of the beverage is below 4.0 in single strength form as a slightly acidic solution is believed to be absorbed more easily.

As indicated above, the sports drink is absorbed more readily if consumed at about 4-10°C, which would require insulated carriers for relatively high ambient temperature environments. On the other hand, in cold environments such as cross-country skiing or biathalon, some athletes prefer warm drinks where dehydration is not a problem.

The process or formulation of a hyptonic, high energy replacement beverage elucidated by the following examples does not limit a wider variety of formulations possible under the invention, as they are only illustrative and representative ones.

EXAMPLE 1

| Aseptic Processing | |
|---|---|
| Formula | % Composition |
| Dextrose | 2.30 |
| Maltodextrins | 2.70 |
| Citric acid anhydrous | .04 |
| Natural flavorings | .20 |
| Water | 94.76 |
| Total (weight basis) | 100.00 |

This formula is designed to be packaged aseptically in a paper laminate box or processed aseptically in a polyethylene or polypropylene bottle-pack that blow molds, fills and seals in a single automatic machine. Example 1 provides a single-strength drink with total carbohydrates of 5 percent and an osmolality of 175-200 mosm/liter. The maltodextrins are commercially available with a dextrose equivalent (DE) range of 9-17 with over 80 percent of the carbohydrate composition being pentasaccharide and above and a degree of polymerization (DP) of 7.1-11.1.

In the aseptic process using a paper laminate, the beverage is brought to a 180°-200° F temperature then cooled to 80° F and filled under sterile conditions. In the bottle-pack aseptic system, the beverage is brought to 195°-205° F, as with hot fill sterilization, and the product is packaged at these elevated temperatures, being brought down to 100° F before being boxed or over-wrapped or put into individual plastic or glass containers.

EXAMPLE 2

| Aseptic Processing | |
|---|---|
| Formula | % Composition |
| Dextrose | 8.43 |
| Maltodextrins | 19.06 |
| Citric acid anhydrous | .15 |
| Natural flavorings | .73 |
| Water | 71.63 |
| Total (by weight) | 100.00 |

The process for Example 2 is virtually identical to Example 1 and the maltodextrins used are commercially available. Dilute 250 mL of this concentrate with 750 mL of water to yield a single strength drink with 7.5 percent carboyhydrates and an osmolality of 195-200 mosm/Liter for use during activities taking place at temperatures below 0° C at which fluid replacement may not be as critical as at higher temperatures.

Dilute 250 mL of this concentrate in Example 2 with 1.250 mL of water to yield a single strength drink with 5.0 percent carboyhydrates and an osmolality of 175-180 mosm/Liter. This version is for use in activities taking place at temperatures above 25° C at which fluid replacement is of primary concern and carbohydrate replacement is secondary.

EXAMPLE 3

To a 2,000 milliliter beaker containing a teflon-coated magnetic stir-bar, add 23.0 grams of dextrose. Then add 2.0 grams of a flavor containing all natural flavor components dissolved in a 95 percent ethyl alcohol base. To these ingredients, add 27.0 grams of a food grade maltodextrin that is approximately 10 DE. Then add .20 grams of sodium benzoate powder to serve as a preservative as this lab batch can be made at ambient temperatures. Pour in 947.30 grams of distilled water and stir the mixture on a magnetic stir plate until all the solids are dissolved. Finally, add 50 grams of anhydrous acid and mix until dissolved. This process will yield 1,000 grams of finished drink.

This finished drink will have a 5.0 percent carbohydrate composition and a pH under 4.0 with osmolality of under 200 mosm/Liter. During more exercise, there is no critical salt depletion. Leaving the salt out of the drink also provides that there can be a significant increase of carbohydrates.

The instant invention uses simple glucose and/or fructose (monosaccharides) to about the 2.0 percent level. This has a major effect on osmolality and also provides a little desirable sweetness. The glucose polymer is used for the balance of the desired carbohydrate, and this contributes very little to taste and very little to osmolality.

As indicated and described in Examples 1 and 2 in regard to the processing or formulating of a hypotonic high energy replacement beverage or liquid food, it may be bottle-packed under sterile or aseptic conditions. In one embodiment, it is preferred that the beverage or liquid food be packed, in exercise portable package of several individualized containers having a capacity of about 10 to about 50 and preferably 15 to 30 ml with a breakaway or removable stopper to expose a mouth part. The preferred liquid beverage or liquid food for use in the portable package of several individualized containers is the one comprising a concentrate of glucose and/or its polymers in water together with acidulent and flavoring usually to give a carbohydrate level of about 25 to 65 percent and preferably 25 to 40 percent of glucose including its polymers. Thus, the athlete could drink these so-called concentrates for energy effects and follow with water, which is normally available along exercise routes and competitive course. Thus, the athlete would be able to carry his energy package without added weight of the water.

Referring specifically to Fig. 9, it will be seen that the athlete portable package 30, as shown, contains at least one to three or more polyethylene bottles 31, usually blow-molded, each having a removable stopper 32a or a breakaway stopper 32b to expose a relatively large mouth 33 for filling the container and to permit the athlete to easily consume the liquid without materially breaking stride. Also, a module carrier containing both removable and breakaway bottles can be used by the runner to advantage to aid in distinguishing between the hypotonic glucose and hypotonic fructose drink where both types are being carried.

The fluid in the vacuum-blown bottle or capsule can be a hypotonic, high energy replacement food or beverage known as a sports drink. The preferred sports drink for these exercise portable packaged individualized containers is the one claimed herein, although some runners or athletes may find, due to their specific physiology, other carbohydrate drinks to be suited for their specific exercise. For instance, the drink or food replacement known as the Pripps drink and composed of a water solution or dispersion of oligosaccharides and glucose polymers may be used as ingredients in our exercise, portable-packaged series of individualized containers. Alternatively, certain persons such as diabetics may find it desirable to carry these quick energy replacement packs to counteract insulin reactions.

The present invention also relates to a modular device capable of carrying a plurality of accessories during prolonged athletic activity. The device consists basically of a belt constructed of lightweight material, said belt fastener section of said belt material and the second being an accessory section such as module. The accessory section is made of a broad strip of a breathing synthetic material, for example, Goretex, so that the belt will allow body heat and sweat to pass through the belt strap.

The material of said belt may be arranged to allow for easy passing of sweat and heat by the belt, by superimposing a layer of breathable synthetic material is worn against the body, and heat and perspiration are drawn through it to the absorbant material and outward from the mesh. The belt may also be padded for comfort in carrying heavier accessories such as two 8 oz. bottles and a large utility pack.

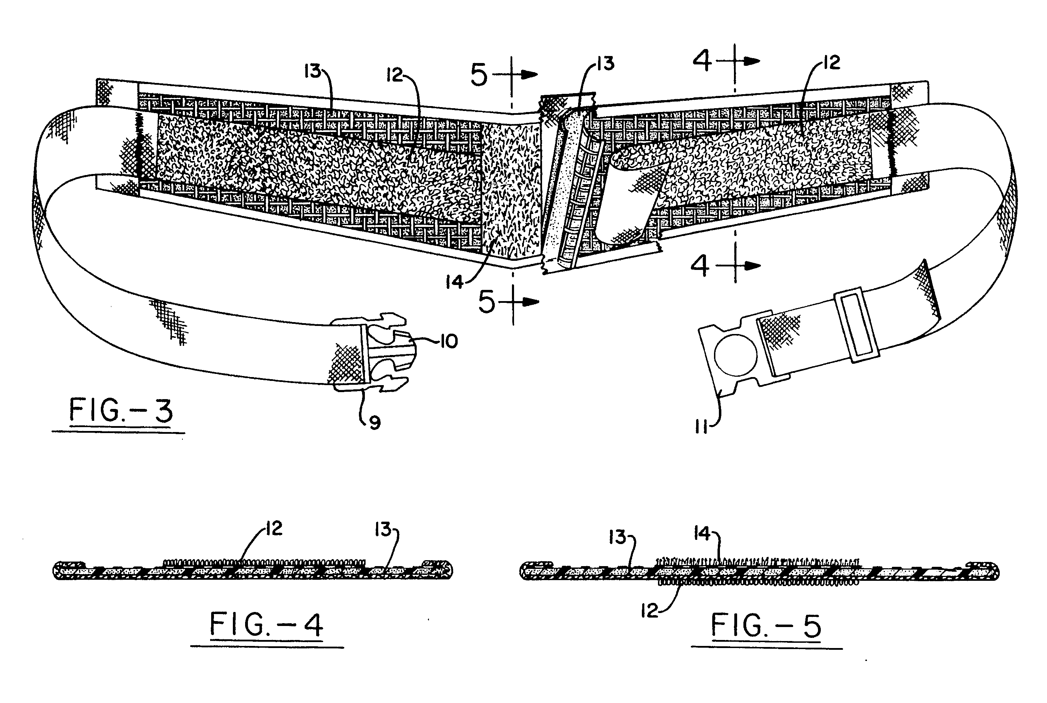

The belt may be constructed for small, medium and large waist sizes, and can generally carry four to five accessory carriers as described below. Minor adjustments in size of the belt may be made by pulling the strap through the apparatus situated next to the receiving end of the closing means such as shown in Fig. 3. The belt may be closed by any usual means attached to the seat belt section of the belt, the preferred means being a fastener as taught by U.S. Patent 4,150,464; however, D-rings, O-rings and various other buckles are also acceptable.

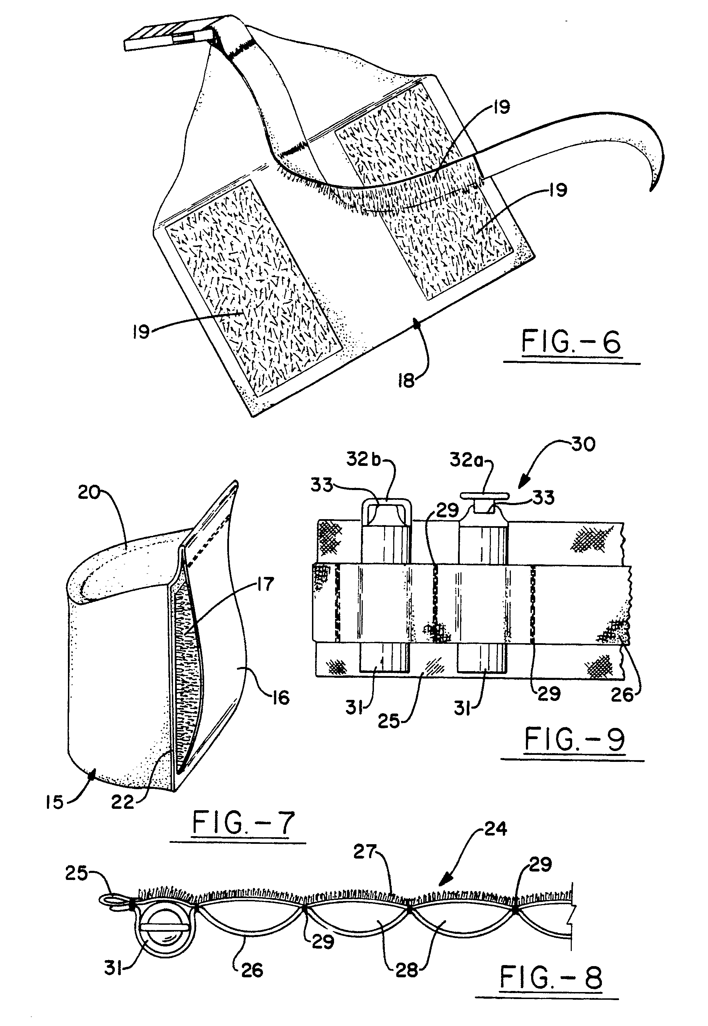

The accessory carriers will be attached to the belt means of broad loops as illustrated in Fig. 7. The loop is attached to the back of the accessory which is slid along the belt and attached to Velcro loops as seen in Fig. 3. Once the accessory carrier is in place, it is secured to the piece of Velcro which extends the length of the belt. The accessory carrier may also be secured by other usual means, such as a strap, a snap or a hook arrangement.

To provide comfort and support in wearing the belt, in addition to the aforementioned pedding along the length of the belt, there may be attached to the belt as need, a pair of vertically arranged foam rectangular support pads, 18,18, which may be placed at the center back of the belt to provide lumber support. The two rectangular support pads are detachable and can be connected to a center strip of Velcro 35 so that the pads may be attached to the belt by Velcro and then secured by a belt. The belt may also have Velcro attached to it, so as to more securely fasten the lumbar support.

Several types of modular units may be carried on the belt. One such accessory may be a holder for a water bottle, approximately 8.5 oz. in volume. Such a holder is constructed of a thick insulating foam 26 arranged in a half tube and sewn to a base constructed of said breathable material and arranged with a loop 16 as a means for applying said accessory to the belt.

A second type of accessory is a small pouch like apparatus with a snap or zipper closure, said pouch being arranged with a loop apparatus to hold it to the belt, and arranged with a belt fastener to more securely fasten the pouch to the spare belt. The pouch may be useful to the athlete to store keys, rain gear, money or identification. Such a pouch may also be fitted with a snap or small pocket to secure keys or loose change.

A third type of accessory is a strip of material to which is mounted by any usual means a strip or series of containers holding nutrient-rich fluid. Said strip of material may be secured to the belt by use of Velcro, snaps or any usual means. The containers may be attached to the belt using elasticized loops through which the containers may be slid.

Another embodiment of this invention illustrated in Fig. 3 has a belt having a baynet or tongue-prong type fastener including a slide clip 9 with prongs 10 at one end of said belt and a slot means 11 at the other end to fasten and unfasten the belt. The belt of Fig. 3 has Velcro such as the layer of loops 12 positioned thereon to aid in holding the foam backing 13 positioned thereon to protect the body of the exerciser, particularly in the lumber region when the belt is worn. As those of ordinary skill in the art know, the Velcro fasteners are composed of a layer of hooks and a layer of loops which forms the fastener when placed in juxtapositional contact. Thus, referring to Fig. 3, the layers of Velcro loops are shown by numeral 12 and a layer of Velcro hooks are shown by numeral 14. The Velcro fastener can be used to attach to the belt the modules desired. For instance, the carrier module 15 of Fig. 7 can be slipped on the belt whereby the module loop 16 rests in contact with one of the layers 12 of Velcro loops where the Velcro hooks 17 contacts the Velcro loops 12 to carrier module 15 adjustably at a desired position on the belt for comfort and ease of movement of the exerciser.

In the embodiment of Fig. 6, the belt is shown in the unfastened position with a module such as a foam module pad 18 in the open position ready to receive the belt by closing the open pad on the belt to bring the pad hooks 19 into juxtapositional contact with the Velcro loops 14 of the belt and thus secure the pad adjustably to the belt to protect the exerciser. It is preferred that the pad be of the open-celled type foam to afford breathability to the belt and thus aid in dissipating heat and sweat. The foam pads can be made of any of the well known foams such as a polyethylene or urethane and may be covered with a soft breathable cloth, if desired. The belt can be of any of the well known constructions, with the customary fasteners but it is preferred that the belt be of an open construction whereby it is breathable. Hence, a preferred type would be the well known fabric mesh belt such as those used by the military.

Referring again to Fig. 7, the carrier module 15 has a fabric or plastic body 20 of essentially a cylindrical or circular shape and dimensions sufficient to receive the bottle or container usually about 10 to 70 ml, and preferably 20 to 40 ml to hold the nourishment and hold said bottle without it slipping into the module. The module 15 preferably has an elastic strip 21 across the bottom of the body to aid in retaining the bottles in a tight fit. As is readily seen, module 15 which has a strap-like loop 16 has the Velcro hooks 17 on face 22 of the module to facilitate anchoring the module on the belt to the Velcro loops 12. In this embodiment, a Velcro fastener component 23 may be attached to inside of the strip loop 16, but may be dispensed with, in many cases, in the interest of economy.

Another embodiment of the carrier module is shown in Fig. 8 In this module 24, a fabric member 25 has a layer 27 of Velcro hooks on one face. It should be appreciated Velcro loops could be used depending on which component of the Velcro fastener will be contacted on the belt. Another fabric member which preferably is an elastic fabric member 26 is attached to the other face of the fabric member 25 by any suitable means 29 such as stitching or staples or braids to give pockets 28 for receiving the material to the carrier, i.e., the bottle 31. It should be appreciated that the modules can be designed to carry any number of articles other than bottles, for instance windbreakers, gloves, thermal wrap, etc.

While in accordance with the patent statutes only the best mode and preferred embodiments of the invention have been illustrated and the described in detail, it is to be understood that the invention is not limited thereto or thereby, but that the scope of the invention is defined by the appended claims.

## Claims

1. A packaged, athlete portable individuallized liquid energy replacement including a series of hollow food grade containers having a capacity of about 15 to 45 ml and having a breakaway or removable stopper for said container to expose a mouth part, each container being aseptically filled with a liquid food concentrate comprising a concentrate of monosaccharides and glucose polymers in water together with an acidulent and sufficient flavoring to give a pleasant taste.

2. The packaged, athlete portable liquid replacement of Claim 1 wherein the liquid food concentrate contains from about 25 percent to about 65 percent of carbohydrate, with the monosaccharide to glucose polymer ratio of 2 to 5.

3. The replacement of Claim 2 wherein the glucose and its polymers includes other monosaccharides and the lower polymers of glucose to the oligosaccharides.

4. A packaged, athlete portable individualized liquid energy replacement including a series of hollow food grade plastic containers having a capacity of about 15 to 45 ml and having a breakaway or removable stopper for said container to expose a mouth part, each container being aseptically filled with a liquid food concentrate comprising a carbohydrate supply source in water together with an acidulent and sufficient flavoring to give a pleasant taste.

5. The replacement of Claim 4 wherein the glucose supply source is other monosaccharides and glucose polymers where the number of glucose units can vary from 1 up to the number in starch.

6. A class of drinks wherein each member of the class is a drink comprised of water, monosaccharides, glucose polymer, an acidulent and flavoring agents and wherein the glucose polymer has a degree of polymerization in the range of from 4 to 15, and the ratio of monosaccharides to glucose polymer is in the range of 1:1 to 1:5.

7. A process for formulation of a hypotonic beverage comprised of water, free glucose and or fructose, glucose polymer, an acidulent and flavoring agents wherein time released delivery of free glucose to muscle tissue is anticipated and controllable by adjustment of glucose polymer degree of polymerization within the range of from 4 to 15, adjustment of ratio of free glucose and/or fructose to glucose polymers within the range of 1:1 to 1:5, and adjustment of overall concentration of free glucose and glucose polymer within the range of about 2.5 to 12.5 percent.

8. A packaged athlete portable food container wherein each individualized container is retained in a pocket in a belt.

9. The packaged athlete portable food container of Claim 8 wherein the belt is of bandolier type.

10. The packaged athlete portable food container of Claim 8 wherein the belt has individualized pockets closed with a Velcro flap.

11. A belt constructed of breathable lightweight material fastening means to effect closure of the belt, said belt having a plurality of detachable modular units designed to form carries of various accessories, means associated with one such carrier to hold a plurality of closable receptacles, said receptacles containing a nutrient-rich drink.

12. A belt as in Claim 1, at least one of said detachable units being affixed with a loop arranged to slide onto the belt individually.

13. A belt as in Claim 2, including means for securing said loop to said belt.

14. A belt as in Claim 1, said belt having an arrangement of vertically placed foam support arranged in the center back of the belt to provide a detachable lumber support.

15. A belt as in Claim 1, said modular units comprising a zippered pouch held to said belt by said means of securing the unit, second type of modular unit comprising a sectional tube made of foam and arranged with an elastic strip to prevent the accessory from slipping through.

16. A material comprising a layer of breathable material, superimposed with a layer of absorbant meshlike fabric and covered with a wide web fabric.

17. A material which allows heat and moisture to be drawn outwardly and away from the heat and moisture source through an absorbant material to allow evaporation.

**Revendications**

1. Un remplacement liquide d'énergie, individualisé, emballé, portable par un athlète, comprenant une série de récipients creux de qualité alimentaire d'une capacité d'environ 15 à 45 ml et comportant un arrêt à briser ou à enlever afin que ledit récipient expose une partie buccale, chaque récipient étant rempli de façon aseptique d'un concentré liquide alimentaire comprenant un concentré de monosaccharides et de polymères de glucose dans l'eau ainsi qu'un acidulant et une quantité suffisante d'agent gustatif pour donner un goût plaisant.

2. Le remplacement liquide emballé portable par un athlète selon la revendication 1 dans lequel le concentré liquide alimentaire contient de 25 pour cent environ à 65 pour cent environ de glucides, le rapport entre les monosaccharides et les polymères de glucose étant compris entre 2 et 5.

3. Le remplacement selon la revendication 2 dans lequel le glucose et ses polymères comprennent d'autres monosaccharides et les polymères inférieurs du glucose avec les oligosaccharides.

4. Un remplacement liquide d'énergie, individualisé, emballé, portable par un athlète, comprenant une série de récipients creux en plastique de qualité alimentaire d'une capacité comprise entre environ 15 et 45 ml et comportant un arrêt à briser ou à enlever afin que ledit récipient expose une partie buccale, chaque récipient étant rempli de façon aseptique d'un concentré alimentaire liquide comprenant une source d'apport de glucides dans l'eau ainsi qu'un acidulant et une quantité suffisante d'agent gustatif pour donner un goût plaisant.

5. Le remplacement selon la revendication 4 dans lequel la source d'amenée de glucose est constituée d'autres monosaccharides et de polymères de glucose où le nombre d'unités de glucose peut varier de 1 jusqu'au nombre dans l'amidon.

6. Une classe de boissons dans laquelle chaque élément de la classe est une boisson constituée d'eau, de monosaccharides, d'un polymère de glucose, d'un acidulant et d'agents gustatifs et dans lequel le polymère de glucose présente un degré de polymérisation compris dans la plage de 4 à 15, et le rapport entre les monosaccharides et le polymère de glucose est dans la plage de 1: 1 à 1: 5.

7. Un procédé destiné à la formulation d'une boisson hypotonique constituée d'eau, de glucose et ou de fructose libres, d'un polymère de glucose, d'un acidulant et d'agents gustatifs dans lequel l'apport libéré, étalé dans le temps, de glucose libre au tissu musculaire est prévu et réglable par un ajustement du degré de polymérisation du polymère de glucose à l'intérieur de la plage comprise entre 4 et 15, par un ajustement du rapport entre le glucose et/ou le fructose libre et les polymères de glucose à l'intérieur de la plage comprise entre 1:1 et 1: 5, et par un ajustement de la concentration d'ensemble du glucose libre et du polymère de glucose à l'intérieur de la plage comprise entre environ 2,5 et 12,5 pour cent.

8. Un récipient de produits alimentaire emballé, portable par un athlète, dans lequel chaque récipient individualisé est retenu dans une poche d'une ceinture.

9. Le récipient de produits alimentaires emballé, portable par un athlète, selon la revendication 8 dans lequel la ceinture est du type cartouchière.

10. Le récipient de produits alimentaires emballé, portable par un athlète, selon la revendication 8 dans lequel la ceinture comporte des poches individualisées fermées par un rabat Velcro.

11. Une ceinture constituée de moyens de fixation en matière légère perméable à l'air pour effectuer la fermeture de la ceinture, ladite ceinture comportant plusieurs ensembles modulaires détachables prévus pour former des supports d'accessoires divers, des moyens associés à l'un de ces supports pour contenir plusieurs réceptacles qui peuvent être fermés, lesdits réceptacles contenant une boisson riche en éléments nutritifs.

**12.** Une ceinture selon la revendication 11, au moins l'une des unités détachables étant fixée à l'aide d'une boucle arrangée pour coulisser individuellement sur la ceinture.

**13.** Une ceinture selon la revendication 12, comprenant des moyens pour fixer ladite boucle sur ladite ceinture.

**14.** Une ceinture selon la revendication 11, ladite ceinture comportant un agencement de supports en mousse placés verticalement agencés dans la partie dorsale centrale de la ceinture afin de constituer un support lombaire détachable.

**15.** Une ceinture selon la revendication 11, lesdits ensembles modulaires comprenant une poche fixée par fermeture éclair et tenue sur ladite ceinture par lesdits moyens de fixation de l'ensemble, un deuxième type d'ensemble modulaire comprenant un élément tubulaire en mousse, comportant une bande élastique pour empêcher que l'accessoire ne le traverse en glissant.

**16.** Une matière comprenant une couche de matière perméable à l'air, à laquelle est superposée une couche d'étoffe absorbante de type maillé et recouverte d'une étoffe tissée lâche.

**17.** Une matière qui permet à la chaleur et à l'humidité d'être extraites et enlevées de la source de chaleur et d'humidité à travers une matière absorbante pour permettre une évaporation.

## Patentansprüche

**1.** Ein abgepackter, von einem Athleten zu tragender, individuell abgestimmter Energieersatz in flüssiger Form mit mehreren hohlen nahrungsmittelverträglichen Behältern mit einem Fassungsvermögen von etwa 15 bis 45 ml und mit einem zum Freilegen eines Mundstücks abbrech- oder entfernbaren Stopfen für den Behälter, wobei jeder Behälter aseptisch mit einem flüssigen Nahrungskonzentrat aus einem Konzentrat aus Monosacchariden und Glucosepolymeren in Wasser zusammen mit einem Säuerungsmittel und ausreichenden Aromastoffen zum Erzielen eines angenehmen Geschmacks gefüllt ist.

**2.** Der abgepackte, von einem Athleten zu tragende Ersatz in flüssiger Form nach Anspruch 1, wobei das flüssige Nahrungskonzentrat zwischen etwa 25 und etwa 65 % Kohlehydrate bei einem Verhältnis der Monosaccharide zu den Glucosepolymeren von 2 : 5 enthält.

**3.** Der Ersatz nach Anspruch 2, wobei die Glucose und deren Polymere andere Monosaccharide und die niederen Polymere der Glucose bis zu den Oligosacchariden enthält.

**4.** Ein abgepackter, von einem Athleten zu tragender, individuell abgestimmter Energieersatz in flüssiger Form mit mehreren hohlen nahrungsmittelverträglichen Behältern mit einem Fassungsvermögen von etwa 15 bis 45 ml und mit einem zum Freilegen eines Mundstücks abbrech- oder entfernbaren Stopfen für den Behälter, wobei der Behälter aseptisch mit einem flüssigen Nahrungskonzentrat aus einer Kohlehydratquelle in Wasser zusammen mit einem Säuerungsmittel und ausreichenden Aromastoffen zum Erzielen eines angenehmen Geschmacks gefüllt ist.

**5.** Der Ersatz nach Anspruch 4, wobei die Glucosequelle aus anderen Monosacchariden und Glucosepolymeren besteht und die Zahl der Glucoseeinheiten von 1 bis zu der Zahl in Stärke schwanken kann.

**6.** Eine Klasse von Getränken, wobei jedes Mitglied der Klasse ein Getränk aus Wasser, Monosacchariden, Glucosepolymer, einem Säuerungsmittel und Aromastoffen ist und wobei das Glucosepolymer einen Polymerisationsgrad im Bereich von 4 bis 15 aufweist und das Verhältnis der Monosaccharide zu dem Glucosepolymer in dem Bereich von 1 : 1 bis 1 : 5 liegt.

**7.** Ein Verfahren zur Formulierung eines hypotonischen Getränks aus Wasser, freier Glucose und/oder Fructose, Glucosepolymeren, einem Säuerungsmittel und Aromastoffen, wobei die zeitbezogene Zufuhr von freier Glucose zum Muskelgewebe vorweggenommen und durch die Einstellung des Polymerisationsgrades des Glucosepolymers im Bereich von 4 bis 15, eine Einstellung des Verhältnisses der freien Glucose und/oder Fructose zu den Glucosepolymeren im Bereich von 1 : 1 bis 1 : 5 und die Einstellung der Gesamtkonzentration der freien Glucose und des Glucosepolymers im Bereich von etwa 2,5 bis 12,5 % gesteuert wird.

8. Ein abgepackter, von einem Athleten zu tragender Nahrungsbehälter, wobei jeder einzelne Behälter in einer Tasche in einem Gürtel gehalten ist.

9. Der abgepackte, von einem Athleten zu tragende Nahrungsbehälter nach Anspruch 8, wobei der Gürtel in der Art eines Bandoliers ist.

10. Der abgepackte, von einem Athleten zu tragende Nahrungsbehälter nach Anspruch 8, wobei der Gürtel mit einem Klettverschluß verschlossene einzelne Taschen aufweist.

11. Ein aus atmungsaktivem, leichtgewichtigem Befestigungsmaterial aufgebauter Gürtel zum Erzielen seines Verschlusses, wobei der Gürtel eine Vielzahl von abnehmbaren modularen Einheiten aufweist, die so gestaltet sind, daß sie Träger verschiedenartiger Zubehörteile bilden, und Mittel mit einem jeden dieser Träger zum Halten einer Vielzahl von verschließbaren Behältnissen zusammenwirken, wobei die Behältnisse ein nährstoffreiches Getränk enthalten.

12. Ein Gürtel wie in Anspruch 1, wobei mindestens eine der abnehmbaren Einheiten mit einer einzeln auf dem Gürtel verschiebbaren Schlaufe befestigt ist.

13. Ein Gürtel wie in Anspruch 2 mit einem Mittel zum Befestigen der Schlaufe am Gürtel.

14. Ein Gürtel wie in Anspruch 1, wobei der Gürtel eine Anordnung aus vertikal plazierten Schaumstoffstützen aufweist, die im mittleren Rückenteil des Gürtels zum Ausbilden einer lösbaren Lendenwirbelstütze angeordnet sind.

15. Ein Gürtel wie in Anspruch 1, wobei die modularen Einheiten aus einem mit einem Reißverschluß versehenen Beutel bestehen, der am Gürtel mit dem Mittel zum Befestigen der Einheit gehalten sind, und die zweite Art der modularen Einheit ein aus Schaum bestehendes Profilrohr ist und mit einem elastischen Band zum Verhindern eines Durchrutschens des Zusatzteiles ausgerüstet ist.

16. Ein Material aus einer Lage aus einem atmungsaktiven Material mit einer darüberliegenden Lage aus einem absorbierenden Maschengewebe und bedeckt mit einem breiten Gewebeband.

17. Ein Material, das ein Wegziehen von Hitze und Feuchtigkeit nach außen und weg von der Wärme- und Feuchtigkeitsquelle durch ein absorbierendes Material zum Ermöglichen eines Verdunstens zuläßt.

EP 0 223 540 B1

FIG.-1

FIG.-2

14

FIG.-3

13   12   5   13   4   12

10

9

14   5   4

FIG.-4

12   13

FIG.-5

13   14

12

EP 0 223 540 B1

FIG.-6

FIG.-9

FIG.-7

FIG.-8